(19) Europäisches Patentamt
European Patent Office
Office européen des brevets

(11) **EP 2 688 174 B1**

(12) **FASCICULE DE BREVET EUROPEEN**

(45) Date de publication et mention
de la délivrance du brevet:
**23.12.2015 Bulletin 2015/52**

(51) Int Cl.:
***H02J 3/38*** *(2006.01)*       ***B60L 11/18*** *(2006.01)*
***G05B 19/02*** *(2006.01)*       *H02J 13/00* *(2006.01)*

(21) Numéro de dépôt: **13176439.1**

(22) Date de dépôt: **15.07.2013**

(54) **Procédé et dispositif de répartition de flux d'énergie électrique et système électrique comportant un tel dispositif**

Verfahren und Vorrichtung zur Verteilung des elektrischen Stromflusses, und eine solche Vorrichtung umfassendes elektrisches System

Method and device for distributing flows of electrical power and electrical system comprising such a device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.07.2012 FR 1256903**

(43) Date de publication de la demande:
**22.01.2014 Bulletin 2014/04**

(73) Titulaire: **Schneider Electric Industries SAS 92500 Rueil-Malmaison (FR)**

(72) Inventeurs:
• **Guyon, Caroline 38050 Grenoble Cedex 09 (FR)**

• **Beguery, Patrick 38190 Bernin (FR)**
• **Lamoudi, Mohamed Yacine 38050 Grenoble Cedex 09 (FR)**

(74) Mandataire: **Grand, Guillaume et al Cabinet Lavoix 62, Rue de Bonnel 69003 Lyon (FR)**

(56) Documents cités:
**WO-A1-2008/073453      WO-A2-2010/042550 US-A1- 2012 173 034**

EP 2 688 174 B1

**Description**

La présente invention concerne un procédé de répartition, au cours d'une période temporelle donnée, des flux d'énergie électrique au sein d'un système comprenant au moins un élément producteur et un élément consommateur d'énergie électrique parmi un réseau de distribution d'énergie électrique, un bâtiment, un élément de stockage d'énergie électrique, une source de production locale d'énergie électrique, et comprenant des moyens de mesure de l'état de charge de chaque élément de stockage et des puissances électriques produites et consommées par chacun des éléments du système.

La présente invention concerne également un dispositif de répartition des flux d'énergie électrique permettant la mise en oeuvre d'un tel procédé ainsi qu'un système électrique comprenant un tel dispositif.

Dans le domaine de la production d'énergie électrique, on connaît des dispositifs et procédés permettant de raccorder des véhicules équipés de batteries et de moyens de production d'énergie électrique à une infrastructure. Ces véhicules présentent la spécificité de pouvoir non seulement être autonomes en énergie après une phase de charge, mais également de pouvoir alimenter l'infrastructure précitée lorsque les batteries sont pleines, permettant ainsi de continuer à accumuler de l'énergie électrique. Ainsi, le document CA-A-2668276 décrit un véhicule électrique solaire dont l'excédent d'énergie est utilisé pour fournir de l'électricité à un bâtiment voisin. De même, le document WO-A-2011/024067 décrit un véhicule électrique utilisé comme source d'énergie secondaire. D'autre part, le document US-A-2012/173034 décrit un procédé de répartition de l'énergie électrique au sein d'un système électrique. Ces documents présentent des systèmes permettant l'amélioration de la production d'énergie locale.

Toutefois, cette amélioration de la gestion d'énergie électrique reste limitée à un système simple comprenant une infrastructure et un véhicule, le système ne comprenant qu'une seule source d'énergie électrique produite localement. De plus, l'approvisionnement de l'infrastructure n'est pas paramétrable et n'a lieu que lorsque la batterie du véhicule est pleine, ce qui est rarement nécessaire.

Le but de l'invention est donc de proposer un procédé de répartition de flux d'énergie électrique dans un système comprenant divers producteurs et consommateurs d'électricité, ce procédé étant paramétrable de manière à tenir compte des particularités des producteurs et consommateurs du système et du type de répartition voulue.

A cet effet, l'invention a pour objet un procédé du type précité qui comprend au moins les étapes suivantes :

- des étapes d'initialisation consistant à :

  a) définir des paramètres physiques de modélisation du système,
  b) définir un modèle du système, sous forme de représentation d'état en utilisant les paramètres physiques déterminés à l'étape a),
  c) définir des paramètres d'optimisation pour la résolution d'un problème et
  d) prédéfinir un problème d'optimisation, sur la période temporelle donnée, pour la répartition des flux d'énergie électrique du système en utilisant le modèle défini à l'étape b), et

- des étapes itératives consistant, à des instants d'actualisation successifs de la période temporelle donnée, à :

  e) mesurer un état de charge de chaque élément de stockage de l'énergie électrique ainsi que des puissances de production et de consommation en énergie électrique des différents éléments du système,
  f) actualiser une prévision du comportement des éléments producteurs et consommateurs du système sur une autre période temporelle de même durée que la durée de la période temporelle donnée et commençant à un instant d'actualisation considéré,
  g) définir la formulation du problème d'optimisation sur l'autre période temporelle,
  h) résoudre le problème de l'étape g) en utilisant un solveur, et
  i) appliquer des commandes de répartition d'énergie électriques dans le système en utilisant les solutions de l'étape h), jusqu'à l'itération suivante.

Suivants d'autres aspects avantageux de l'invention, le procédé de répartition comprend une ou plusieurs des caractéristiques suivantes, prises isolément ou dans toute combinaison techniquement admissible :

- L'étape a) comprend la définition de paramètres permettant de déterminer un profil de production et/ou de consommation d'au moins un élément du système sur la période temporelle.
- L'étape c) de définition des paramètres d'optimisation comprend au moins la définition de la période temporelle et d'une période d'actualisation définissant la durée entre deux étapes itératives.
- Le modèle du système est défini avec la représentation d'état suivante :

$$\begin{cases} x_{k+1} = Ax_k + Bu_k + Gw_k \\ y_k = Cx_k + Du_k + Fw_k \end{cases}$$

où $x_k$ et $x_{k+1}$ sont les états x du système à des instants k et k+1, $y_k$ est un paramètre y de sortie du système à l'instant k, $u_k$ est un paramètre u de commande à l'instant k, $w_k$ est un paramètre w de perturbation à l'instant k et A, B, G, C, D, F sont des matrices constantes.

- L'état x du système correspond à l'état de charge de chaque élément de stockage de l'énergie électrique.
- Le paramètre de commande u est défini selon le vecteur suivant :

$$u = \begin{bmatrix} P_{ch\,arg\,e}^{M_{11}} & P_{dech\,arg\,e}^{M_{11}} & P_{achat}^{M_{14}} & P_{revente}^{M_{14}} & P_{localCons}^{M_8} \end{bmatrix}^T$$

où $P_{ch\,arg\,e}^{M_{11}}$ et $P_{dech\,arg\,e}^{M_{11}}$ sont respectivement des puissances de charge et de décharge correspondant à chaque élément de stockage, $P_{achat}^{M_{14}}$ et $P_{revente}^{M_{14}}$ sont respectivement des puissances achetées et vendues correspondant à chaque réseau de distribution et où $P_{localCons}^{M_8}$ correspond aux puissances locales produites par chaque élément du système et consommées localement.

- Le paramètre de perturbation w est défini selon le vecteur suivant :

$$w = \begin{bmatrix} P_{prod}^{M_8} & E_{vehicule}^{M_{10}} \end{bmatrix}^T$$

où $P_{prod}^{M_8}$ correspond aux puissances électriques produites localement par chaque source de production locale, et $E_{vehicule}^{M_{10}}$ correspond aux énergies consommées par chaque véhicule électrique incorporant un ou plusieurs éléments de stockage, lorsque ces éléments ne sont pas raccordés au reste du système.

- Le paramètre de sortie du système est défini selon le vecteur suivant :

$$y = \begin{bmatrix} P_{b\hat{a}timent}^{M_4} & x & 0 \end{bmatrix}^T$$

où $P_{b\hat{a}timent}^{M_4}$ correspond à la puissance fournie à chaque bâtiment, et x correspond aux états de charges de chaque élément de stockage.

- L'étape d) de prédéfinition du problème d'optimisation consiste à modéliser le comportement du système pour la période temporelle donnée en utilisant l'équation suivante :

$$\tilde{Y} = \phi x_0 + \psi\tilde{U} + \xi\tilde{w}$$

où $x_0$ est un état initial du système, $\tilde{Y}$, $\tilde{U}$ et $\tilde{w}$ sont respectivement des paramètres de sortie, de commande et de perturbation du système sur la période temporelle donnée exprimés sous forme matricielle, et $\Phi$, $\psi$ et $\xi$ sont des matrices constantes dont les éléments dépendent des matrices constantes A, B, G, C, D et F.

- L'étape g) de formulation du problème d'optimisation comprend au moins la définition d'une fonction objectif $f(\hat{U})$ ainsi que la mise à jour de contraintes du problème d'optimisation, ces contraintes étant exprimées sous la forme de l'inégalité suivante :

$$A_{in}\tilde{U} \leq b_{in}$$

**EP 2 688 174 B1**

où $\tilde{U}$ est le paramètre de commande sur la période temporelle donnée, $A_{in}$ une matrice dépendante de la matrice $\psi$, et $b_{in}$ une matrice dépendante des matrices $\psi$ et $\xi$, des valeurs minimales $\tilde{Y}_{min}$ et maximale $\tilde{Y}_{max}$ du paramètre de sortie $\tilde{Y}$, et de la variation maximale $\delta\tilde{U}_{max}$ de la commande $\tilde{U}$.

L'invention a également pour objet un dispositif de répartition permettant de mettre en oeuvre le procédé mentionné ci-dessus et, plus spécifiquement un dispositif de répartition, au cours d'une période temporelle donnée, des flux d'énergie électrique au sein d'un système comprenant au moins un élément producteur et un élément consommateur d'énergie électrique parmi un réseau de distribution d'énergie électrique apte à fournir et/ou recevoir de l'énergie des autres éléments du système, un élément de stockage d'énergie électrique apte à recevoir la production d'énergie des éléments producteurs d'énergie et/ou à fournir de l'énergie aux éléments consommateurs d'énergie du système, un bâtiment apte à consommer une énergie produite localement et/ou issue du réseau de distribution et/ou issue d'un élément de stockage, et une source de production d'énergie électrique apte à fournir de l'énergie au réseau et/ou au bâtiment et/ou à l'élément de stockage, et comprenant également des moyens de mesure de l'état de charge de chaque élément de stockage et des puissances électriques produites et consommées par chacun des éléments du système. Ce dispositif est **caractérisé en ce qu'il** comprend des moyens de calculs configurés pour mettre en oeuvre :

- des étapes d'initialisation consistant à :

    a) définir des paramètres physiques de modélisation du système,
    b) définir un modèle du système, sous forme de représentation d'état en utilisant les paramètres physiques déterminés à l'étape a),
    c) définir des paramètres d'optimisation pour la résolution d'un problème et
    d) prédéfinir un problème d'optimisation, sur la période temporelle donnée, pour la répartition des flux d'énergie électrique du système en utilisant le modèle défini à l'étape b), et

- des étapes itératives consistant, à des instants d'actualisation successifs de la période temporelle donnée à :

    e) mesurer l'état de charge de chaque élément de stockage de l'énergie électrique ainsi que des puissances de production et de consommation en énergie électrique des différents éléments du système,
    f) actualiser une prévision du comportement des éléments producteurs et consommateurs du système sur une autre période temporelle de même durée que la durée de la période temporelle donnée et commençant à un instant d'actualisation considéré,
    g) définir la formulation du problème d'optimisation sur l'autre période temporelle,
    h) résoudre le problème de l'étape g) en utilisant un solveur, et
    i) appliquer des commandes de répartition d'énergie électriques dans le système en utilisant les solutions de l'étape h), jusqu'à l'itération suivante.

Suivant d'autres aspects avantageux de l'invention, le dispositif de répartition des flux d'énergie électrique comprend une ou plusieurs des caractéristiques suivantes, prises isolément ou suivant toute combinaison techniquement admissible :

- L'élément de stockage comprend au moins une batterie d'accumulateurs disposée sur un véhicule électrique.

L'invention concerne enfin un système électrique comprenant au moins un élément producteur et un élément consommateur d'énergie électrique parmi : un réseau de distribution, un bâtiment, un élément de stockage, une source de production locale, et comprenant également des moyens de mesure tels qu'envisagés ci-dessus. Ce système comprend un dispositif de répartition tel que mentionné ci-dessus, alors que le réseau de distribution d'énergie électrique intelligent communique dynamiquement avec le dispositif de répartition, notamment sur les prix de rachat et de vente de l'énergie et/ou la puissance disponible du réseau de distribution et/ou la présence d'heures creuses d'utilisation de l'énergie du réseau.

Les caractéristiques et avantages de l'invention apparaîtront à la lecture de la description qui va suivre, donnée uniquement à titre d'exemple non limitatif, et faite en référence aux dessins annexés, dans lesquels :

- la figure 1 est une représentation schématique d'un système comprenant un dispositif de répartition d'énergie électrique selon l'invention raccordé à des éléments producteurs et consommateurs d'énergie électrique,
- la figure 2 est une représentation schématique des flux de données d'entrée et de sortie vers et depuis l'unité de supervision visible à la figure 1, et

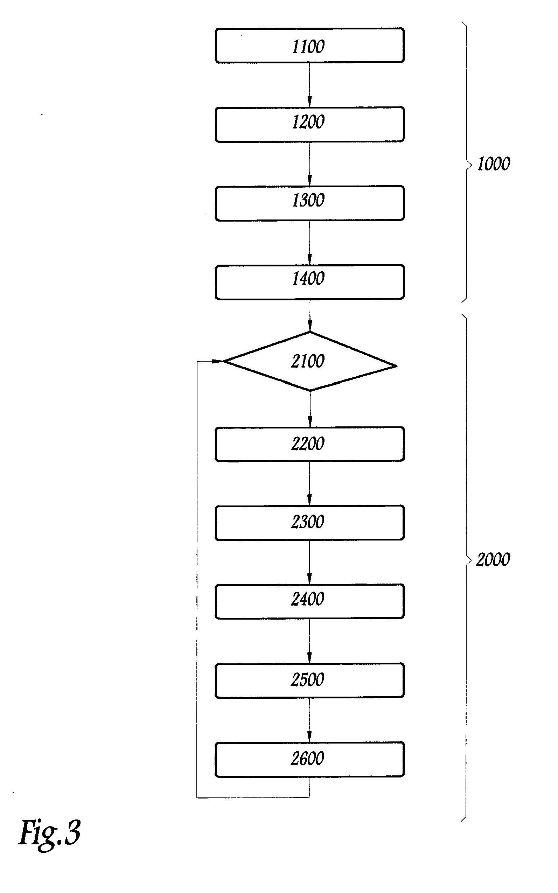

- la figure 3 est un schéma bloc d'un procédé conforme à l'invention de répartition des flux d'énergie électrique au sein du système visible à la figure 1.

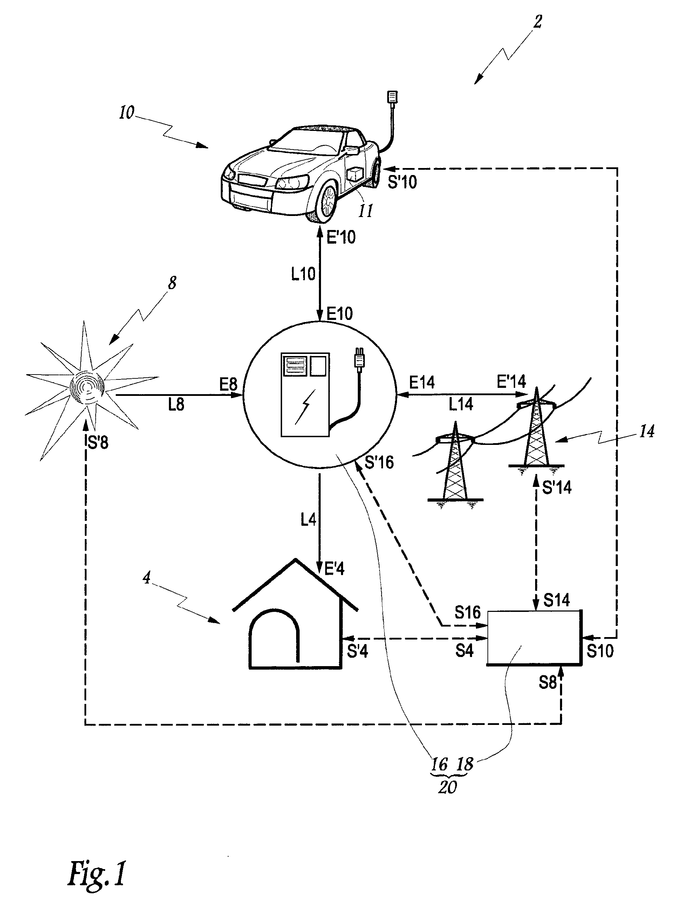

Sur la figure 1, un système 2 comprend un bâtiment 4, une source 8 de production locale d'énergie électrique, un véhicule électrique 10 équipé d'un élément de stockage de l'énergie électrique 11, un réseau électrique de distribution 14, un répartiteur 16 et une unité de supervision 18.

Dans la suite de la description et comme visible à la figure 1, on nomme LP une liaison représentée en trait plein à la figure 1 et reliant le répartiteur 16 avec un élément du système 2 dont la référence est un entier naturel P égal à 4, 8, 10 ou 14. Cette liaison LP est une liaison conductrice propre à transporter une énergie électrique. De même, on note respectivement EP et E'P les sens de transfert d'énergie électrique d'un élément référencé P vers le répartiteur 16 et ceux du répartiteur 16 vers un élément référencé P. Par exemple, le réseau de distribution 14 est raccordé au répartiteur 16 par la liaison L14. L'énergie transférée du bâtiment 14 vers le répartiteur 16 est notée E14, tandis que l'énergie transférée du répartiteur 16 vers le bâtiment 14 est notée E'14.

De même chaque élément du système 2 est apte à communiquer via des liaisons de données représentées en pointillés sur la figure 1, où P est un entier naturel représentant une référence visible à la figure 1. Par convention on nomme SP un signal communiqué par élément P du système 2 vers l'unité de supervision 18 et S'P un signal communiqué de l'unité de supervision 18 vers cet élément P. Par exemple, le réseau électrique 14 et l'unité 18 sont aptes à communiquer dans les deux sens et on note S14 le signal envoyé par le réseau 14 à l'unité 18 et S'14 le signal envoyé de l'unité vers le réseau 14.

Le bâtiment 4 est apte à consommer de l'énergie électrique produite par la source locale 8, l'élément de stockage 10, ou encore le réseau de distribution 14.

La source locale 8 de production d'énergie électrique E8 est, selon le mode de réalisation visible à la figure 1, une installation de panneaux photovoltaïques. En variante, cette source de production comprend des éoliennes ou d'autres moyens de production d'énergie électrique telle qu'une turbine. Cette source locale peut, par exemple, équiper le bâtiment 4 et/ou le véhicule 10. La totalité de cette énergie E8 produite localement est acheminée au répartiteur 16 via la liaison L8.

Le véhicule électrique 10 est apte à stocker dans son élément de stockage 11 une énergie électrique E'10 produite par les éléments producteur 8, 10, 14 du système 2 et acheminée par le répartiteur 16. En pratique, cet élément de stockage 11 est une batterie d'accumulateurs et l'énergie électrique E'10 est stockée dans la batterie 11 pour une utilisation ultérieure du véhicule 10. Dans ce qui suit, on considère que l'élément de stockage 11 est apte à stocker une énergie E'10, ainsi qu'à fournir une énergie E10 au répartiteur 16.

Le réseau de distribution électrique 14 transporte de l'énergie E14 électrique qui est acheminée au répartiteur 16. Il peut également recevoir de l'énergie E'14 électrique du répartiteur 16 dans le cas de la revente d'énergie électrique produite localement par les producteurs 8, 10 du système 2. Ce réseau 14 de distribution électrique ou « smart grid » est dit intelligent dans la mesure où il communique à l'unité de supervision 18 des informations concernant, par exemple, l'évolution des tarifs de l'énergie, les puissances disponibles sur le réseau 14, ou encore les périodes d'heures creuses, comme représenté par le signal S14 à la figure 1.

Le répartiteur 16 est raccordé à chaque élément 4, 8, 10, 14, 18 du système. Il est apte à orienter des flux d'énergie électrique E4, E'4, E8, E10, E'10, E14, E'14 entre les différents éléments producteurs 4, 8, 10, 14 et/ou consommateurs 4, 10, 14 du système 2, comme représenté sur la figure 1.

L'unité de supervision 18 est, de manière analogue au répartiteur 16, raccordée à chaque élément 4, 8, 10, 14, 16 du système 2. Elle est apte à communiquer avec ces éléments dans les deux sens, dans le but de recevoir des mesures des puissances produites ou consommées par chacun des éléments 4, 8, 10 et 14 et l'état du répartiteur 16, via les signaux S4, S8, S10, S14 et S16, et de commander le comportement de chacun de ces éléments 4, 8, 10, 14, 16, via les signaux S'4, S'8, S'10, S'14 et S'16.

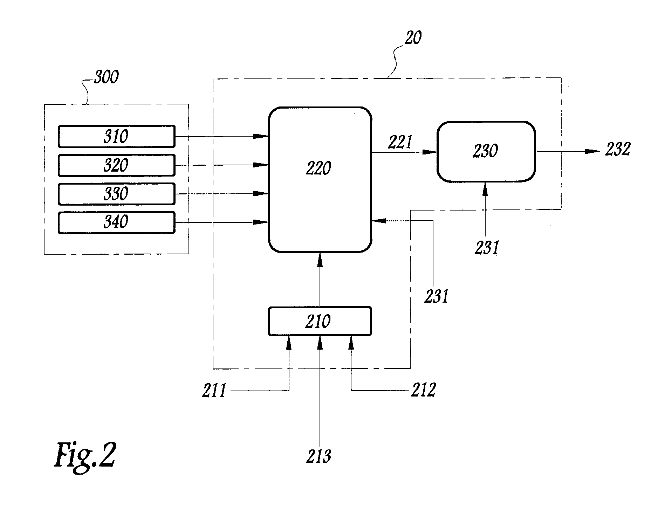

L'unité de supervision 18 constitue, avec le répartiteur 16, un dispositif de répartition 20 des flux d'énergie électrique produits E8, E10, vendu E'14 et consommés E'4, E'10, E14 au sein du système 2. Afin de réaliser cette répartition, le dispositif 20 est apte à résoudre un problème d'optimisation qui permet, à partir d'informations sur le comportement des éléments 4, 8, 10 et 14 du système 2, de définir des commandes de répartition adaptées aux souhaits correspondants d'un utilisateur. Ces informations et commandes sont visibles plus spécifiquement sur la figure 2.

Le dispositif 20 comprend une unité de configuration 210, une unité d'optimisation 220 et une unité d'asservissement 230 reparties entre les composants 16 et 18 du dispositif 20, de préférence situés dans l'unité 18.

L'unité de configuration 210 stocke des premières données 211, des deuxièmes données 212 et des troisièmes données 213. Les premières données 211 sont des données d'architecture du système concernant, par exemple, le nombre et le type d'éléments présents dans le système 2, ainsi que leur agencement. Les deuxièmes données 212 sont des paramètres physiques des éléments du système 2 dimensionnant la production et/ou la consommation des différents éléments. Par exemple, de tels paramètres physiques sont la capacité de stockage de la batterie 11, ou encore la puissance souscrite au réseau.

Les troisièmes données 213 sont des paramètres d'optimisation qui sont utilisés pour le calcul de la répartition d'énergie dans le système 2. Ces données 213 comprennent la durée d'une période temporelle donnée $T_{totale}$ pour laquelle le problème d'optimisation est défini, la durée d'une période $T_{actu}$ d'actualisation qui correspond à la période séparant deux résolutions de problème d'optimisation consécutives, une durée séparant deux instants k et k+1, ou encore une fonction objectif qui sera déterminée selon le mode de répartition énergétique souhaité, comme par exemple une répartition minimisant l'achat d'énergie électrique au réseau 14 de distribution.

Dans la suite de la description, on considère un mode de réalisation où la période temporelle $T_{totale}$ a une durée de vingt-quatre heures, la période d'actualisation $T_{actu}$ a une durée de dix minutes et la durée séparant deux instants k et k+1 est d'une minute.

Les données de l'unité de configuration 210 sont modifiées uniquement lors de la modification, l'ajout ou le retrait d'un élément du système 2, ou lors d'une modification des paramètres d'optimisation.

L'unité d'optimisation 220 réalise, selon la période d'actualisation $T_{actu}$, c'est-à-dire ici toutes les dix minutes, un calcul itératif qui utilise les données 211, 212, 213, lesquelles sont indépendantes du temps. Par ailleurs, l'unité d'optimisation 220 utilise pour ce même calcul les données d'un groupe 300 de modules 310, 320, 330, 340 qui sont actualisées à la fin de chaque période d'actualisation $T_{actu}$, soit toutes les dix minutes.

Ce groupe 300 comprend un premier module 310 comprenant les estimations en production de chaque élément producteur d'énergie du système sur la prochaine période temporelle $T_{totale}$, c'est-à-dire les prochaines vingt-quatre heures, un deuxième module 320 comprenant les estimations en consommation des éléments consommateurs d'énergie du système 2 sur les prochaines vingt-quatre heures, un troisième module 330 comprenant les données sur la consommation et la production des prochaines vingt-quatre heures prévue pour le véhicule 10 et un quatrième module 340 comprenant des données sur le comportement du réseau de distribution 14 pour les prochaines vingt-quatre heure. Par exemple, les données de production et de consommation des éléments 4, 8, 10 et 14 du système 2 sont des profils de production et de consommation prévisionnels qui peuvent tenir compte de paramètres météorologiques, si nécessaire. Ces données sont accessibles, par exemple à partir d'un serveur non représenté sur les figures, via une connexion internet, ou encore tout autre type de connexion dédié au transfert de ces données. A titre d'exemple encore, ces données peuvent provenir d'une station locale, par exemple météorologique, pour la prévision du comportement des producteurs 8 d'énergie locale.

L'unité d'optimisation communique également avec une unité d'asservissement 230 dont le but est d'adapter des consignes 221 en puissance de l'unité d'optimisation 220 en fonction de la mesure de puissances électriques réelles 231 des éléments du système 2.

L'unité d'optimisation 220 est l'organe de calcul central du dispositif de répartition 20. Elle utilise les données 211, 212, 213 de l'unité de configuration 210, les données d'actualisation du groupe 300 de modules 310, 320, 330, 340 et les mesures de puissances réelles 231, afin de déterminer les consignes 221 de puissance pour la répartition de l'énergie dans le système 2.

L'unité d'asservissement 230 compare les consignes 221 et les mesures de puissances 231, afin d'établir une commande 232 des flux de puissance. Cette commande 232 est composée de l'ensemble des signaux S'4, S'8, S'10, S'14, S'16 de commande des flux de puissance.

Le procédé comprend une première phase 1000 d'initialisation et une deuxième phase 2000 de calcul itératif.

La phase d'initialisation 1000 comprend une première étape 1100 de définition des paramètres physiques 212 de modélisation du système, une deuxième étape 1200 de définition d'un modèle du système, sous forme de représentation d'état en utilisant les paramètres physiques 212 déterminés à l'étape 1100 ainsi que les données 211 de l'architecture du système, une troisième étape 1300 de définition des paramètres d'optimisation 213, et une quatrième et dernière étape 1400 de prédéfinition d'un problème d'optimisation, sur la période temporelle $T_{totale}$ déterminée lors de l'étape 1300 et qui est ici de vingt-quatre heures, en utilisant le modèle défini à l'étape 1200.

Dans la première étape 1100, on définit les paramètres physiques 212 du système 2, c'est-à-dire que l'on détermine, pour chaque élément 4, 8, 10 et 14 du système 2, des grandeurs physiques dimensionnant leur consommation ou leur production en énergie électrique, et donc la répartition d'énergie dans le système 2. Pour la voiture 10 par exemple ces paramètres comprennent le rendement de la batterie 11 d'accumulateurs. Dans la deuxième étape 1200, on définit un modèle du système 2 en utilisant la représentation d'état définie par le système d'équations [1] suivant :

$$\begin{cases} x_{k+1} = Ax_k + Bu_k + Gw_k \\ y_k = Cx_k + Du_k + Fw_k \end{cases} \qquad [1]$$

où $x_k$ et $x_{k+1}$ sont les états x du système à des instants k et k+1, séparés dans l'exemple par une minute, $y_k$ est un paramètre y de sortie du système à l'instant k, $u_k$ est un paramètre de commande u à l'instant k, $w_k$ est une perturbation w à l'instant k, et A, B, G, C, D, F sont des matrices constantes.

Dans l'exemple de réalisation que l'on décrit, l'état du système x est l'état de charge de la batterie 11. Le paramètre de commande u est défini selon l'équation [2] suivante :

$$u = \begin{bmatrix} P_{ch\arg e} & P_{déch\arg e} & P_{achat} & P_{revente} & P_{localCons} \end{bmatrix}^T \qquad [2]$$

où $P_{charge}$ et $P_{décharge}$ sont des puissances de charge et de décharge de l'élément de stockage 11, $P_{achat}$ et $P_{revente}$ sont des puissances achetées et vendues au réseau 14 de distribution, et/ou $P_{localCons}$ est une puissance consommée localement. Dans l'équation [2] et la suite de la description, l'exposant T est utilisé pour désigner la transposition d'une matrice. Cette équation [2] est un cas particulier de l'équation générale [2bis] suivante définissant le paramètre de commande u pour un nombre quelconque d'éléments de stockage 11, de réseaux 14 et de sources de production d'énergie locale 8 :

$$u = \begin{bmatrix} P_{ch\arg e}^{M_{11}} & P_{dech\arg e}^{M_{11}} & P_{achat}^{M_{14}} & P_{revente}^{M_{14}} & P_{localCons}^{M_8} \end{bmatrix}^T \qquad [2bis]$$

où $P_{ch\arg e}^{M_{11}}$ et $P_{dech\arg e}^{M_{11}}$ sont respectivement des puissances de charge et de décharge correspondant à chaque élément de stockage 11, $P_{achat}^{M_{14}}$ et $P_{revente}^{M_{14}}$ sont respectivement des puissances achetées et vendues correspondant à chaque réseau de distribution 14 et où $P_{localCons}^{M_8}$ correspond aux puissances locales produites par chaque élément 8, 10 du système 2 et consommées localement.

Le paramètre de perturbation w est défini selon l'équation [3] suivante :

$$w = \begin{bmatrix} P_{prod} & E_{véhicule} \end{bmatrix}^T \qquad [3]$$

où $P_{prod}$ est une puissance produite localement et $E_{véhicule}$ une énergie consommée par le véhicule 10 électrique incorporant l'élément de stockage 11 lorsque l'élément de stockage n'est pas raccordé au reste du système, c'est-à-dire lorsque le véhicule 10 est en cours d'utilisation. Cette équation [3] est un cas particulier de l'équation [3bis] générale suivante

$$w = \begin{bmatrix} P_{prod}^{M_8} & E_{vehicule}^{M_{10}} \end{bmatrix}^T \qquad [3bis]$$

où $P_{prod}^{M_8}$ correspond aux puissances électriques produites localement par chaque source 8 de production locale, et $E_{vehicule}^{M_{10}}$ correspond aux énergies consommées par chaque véhicule 10 électrique incorporant un ou plusieurs éléments de stockage 11, lorsque ces éléments ne sont pas raccordés au reste du système 2.

Le paramètre de sortie du système y est défini selon l'équation [4] suivante :

$$y = \begin{bmatrix} P_{bâtiment} & x & 0 \end{bmatrix}^T \qquad [4]$$

où $P_{batiment}$ est une puissance fournie au bâtiment 4 et x l'état de charge la batterie 11. Cette équation [4] est un cas particulier de l'équation [4bis] suivante :

$$y = \begin{bmatrix} P_{bâtiment}^{M_4} & x & 0 \end{bmatrix}^T \qquad [4bis]$$

où $P_{bâtiment}^{M_4}$ correspond à la puissance fournie à chaque bâtiment 4, et x correspond aux états de charges de chaque élément de stockage 11.

Au cours de l'étape 1300, l'unité 18 définit les paramètres d'optimisation 213. Cette étape 1300 comprend le choix de la durée prise en compte pour la définition du problème d'optimisation, soit vingt-quatre heure dans l'exemple considéré, de la période d'actualisation $T_{actu}$ de la boucle itérative de la phase 2000, soit dix minutes dans l'exemple considéré, et de l'écart entre deux instants k et k+1, soit une minute dans l'exemple considéré. Cette étape 1300 comprend également la définition d'une fonction objectif pour la définition du problème d'optimisation. On note que si la période temporelle $T_{totale}$ est plus longue et/ou la période d'actualisation $T_{actu}$ est plus courte et/ou l'écart entre deux instants est plus court, alors le temps de calcul est plus important, d'où l'importance d'un pré-calcul dans la phase 1000 des matrices $\varphi$, $\psi$, $\xi$ qui serviront à chaque itération de la phase 2000.

Lors de la dernière étape 1400 de la phase d'initialisation 1000, l'unité 18 prédéfinit un problème d'optimisation pour la répartition des flux d'énergie E'4, E8, E10, E'10, E14, E'14 électrique du système 2 sur la période temporelle $T_{totale}$, en utilisant le modèle défini à l'étape 1200. La prédéfinition de ce problème d'optimisation consiste à généraliser la représentation d'état donnée par le système d'équations [1] pour obtenir l'équation matricielle [5] suivante :

$$\tilde{Y} = \phi x_0 + \psi \tilde{U} + \xi \tilde{w} \qquad [5]$$

où $x_0$ est un état initial du système, $\tilde{Y}$, $\tilde{U}$ et $\tilde{w}$ sont respectivement des paramètres de sortie, de commande et de perturbation du système pour une durée de vingt-quatre heures exprimés sous forme matricielle, et $\phi$, $\psi$ et $\xi$ sont des matrices constantes dont les éléments dépendent des matrices constantes A, B, G, C , D et F définies lors de l'étape 1200. L'équation [5] étant la généralisation de la représentation d'état du système d'équations [1], le paramètre $\tilde{U}$ est composé de vecteurs de commande $u_0$, $u_k$, $u_{k+1}$, ... $u_{k+n}$, avec n un entier naturel, définissant la série de commandes à appliquer sur la période $T_{totale}$. De même, les matrices $\tilde{Y}$ et $\tilde{w}$ sont composées respectivement de sorties $y_0$, $y_k$, $y_{k+1}$, ... $y_{k+n}$ et de perturbations $w_0$, $w_k$, $w_{k+1}$, ... $w_{k+n}$ à considérer sur la période $T_{totale}$ de vingt-quatre heures. En pratique les matrices $\phi$, $\psi$ et $\xi$ sont définies respectivement par les équations suivantes [6], [7] et [8] :

$$\phi = \begin{bmatrix} C \\ CA \\ CA^2 \\ \vdots \\ CA^N \end{bmatrix} \qquad [6]$$

$$\psi = \begin{bmatrix} D & 0 & \cdots & \cdots & \cdots & 0 \\ CB & D & \ddots & & & \vdots \\ CAB & CB & \ddots & \ddots & & \vdots \\ \vdots & \ddots & \ddots & \ddots & \ddots & \vdots \\ \vdots & & \ddots & \ddots & \ddots & 0 \\ CA^{N-1}B & \cdots & \cdots & CAB & CB & D \end{bmatrix} \qquad [7]$$

$$\xi = \begin{bmatrix} F & 0 & \cdots & \cdots & \cdots & 0 \\ CG & F & \ddots & & & \vdots \\ CAG & GF & \ddots & \ddots & & \vdots \\ \vdots & \ddots & \ddots & \ddots & \ddots & \vdots \\ \vdots & & \ddots & \ddots & \ddots & 0 \\ CA^{N+1}G & \cdots & \cdots & CAG & CG & F \end{bmatrix} \qquad [8]$$

L'intérêt de la prédéfinition du problème, c'est-à-dire de l'établissement des matrices $\varphi$, $\psi$, $\xi$, est de ne calculer qu'une unique fois ces matrices qui seront utilisées à chaque itération de la phase 2000, dans le but de gagner de la mémoire et du temps de calcul effectué par l'unité d'optimisation 220.

La phase itérative 2000 comprend une cinquième étape 2100 d'activation de l'itération, une sixième étape 2200 de mesure des puissances électriques du système, une septième étape 2300 d'actualisation des données du groupe 300 de modules 310, 320, 330, 340, une huitième étape 2400 étape de définition du problème d'optimisation, une neuvième étape 2500 de résolution du problème défini à l'étape 2400 et une dixième 2600 étape d'application des commandes de répartition de l'énergie issues des résultats de l'étape 2500.

Lors de la cinquième étape 2100, on met en attente la phase itérative 2000 jusqu'à l'arrivée d'un nouvel instant d'actualisation t, soit pendant dix minutes.

Lors de la première étape 2200 qui est déclenchée lorsqu'on atteint un instant d'actualisation, on récupère les mesures des puissances consommées et produites par chacun des éléments du système 2, ainsi que l'état de charge de la batterie 11. Cette étape 2200 permet de mettre à jour le comportement des différents éléments du système 2 en vue de résoudre le problème d'optimisation. En pratique, mesurer les différentes puissances et l'état de charge de la batterie permet d'identifier les vecteurs u, w, y et la grandeur x, permettant ainsi d'obtenir la représentation d'état définie par le système d'équations [1] pour l'instant courant d'actualisation.

L'étape 2300 consiste à actualiser la prévision des paramètres du système 2 sur la période $T_{totale}$, c'est-à-dire sur les prochaines vingt-quatre heures. Cette étape consiste à la mise à jour des profils de production et de consommation d'énergie pour chacun des éléments 4, 8, 10, 14 du système 2, la mise à jour des données liées à la consommation et à l'utilisation planifiée du véhicule électrique 10, ainsi qu'à la mise à jour de contraintes portant sur le paramètre de commande $\tilde{U}$, le paramètre de sortie $\tilde{Y}$, le paramètre de perturbation $\tilde{w}$, ainsi que sur une variation $\delta\tilde{U}$ entre deux matrices $\tilde{U}$ calculées à deux instants consécutifs k et k+1. Cette actualisation est effectuée par l'intégration des données actualisées du groupe 300 de modules 310, 320, 330, 340 et permet d'effectuer une prédiction sur l'évolution des puissances consommées et produites dans les prochaines vingt-quatre heures, et donc d'établir les matrices $\tilde{Y}$ et $\tilde{w}$.

Lors de l'étape 2400, l'unité 18 formule le problème d'optimisation. Conformément aux méthodes connues de définition d'un tel problème, cette étape 2400 comprend la mise à jour de la fonction objectif $f(\hat{U})$ définie lors de l'étape 1300, où $\tilde{U}$ est le paramètre de commande du système 2 pour les vingt-quatre prochaines heures. Toutes les contraintes mises à jour précédemment sont exprimées sous la forme de l'inégalité [9] suivante :

$$A_{in}\tilde{U} \leq b_{in} \qquad [9]$$

où $\tilde{U}$ est le paramètre de commande obtenu par résolution du problème d'optimisation lors de l'étape 2500, la matrice $A_{in}$ est définie selon l'équation [10] suivante :

$$A_{in} = \begin{bmatrix} \psi \\ -\psi \\ D_{T_{totale}+1} \\ -D_{T_{totale}+1} \\ [I_{N_u} \quad O_{N_u \times N_u \cdot T_{totale}}] \\ [-I_{Nu} \quad O_{N_u \times N_u \cdot T_{totale}}] \end{bmatrix} \qquad [10]$$

avec

$$D_{T_{totale}+1} = \begin{bmatrix} I_{N_u} & -I_{N_u} & 0_{N_u} & \cdots & \cdots & 0_{N_u} \\ 0_{N_u} & I_{N_u} & -I_{N_u} & & & \vdots \\ \vdots & \ddots & \ddots & \ddots & & \vdots \\ \vdots & & \ddots & \ddots & \ddots & 0_{N_u} \\ 0_{N_u} & \cdots & \cdots & 0_{N_u} & I_{N_u} & -I_{N_u} \end{bmatrix}$$

et où $\psi$ est la matrice définie à l'équation [7], $I_{N_u}$ est une matrice identité de dimension $N_u$, $0_{N_u} \times N_u \cdot T_{totale}$ est une matrice nulle comprenant $N_u$ lignes et $N_u \cdot T_{totale}$ colonnes, $N_u$ étant le nombre de commandes du paramètre $\tilde{U}$, et la matrice $b_{in}$ est définie selon l'équation [11] suivante :

$$b_{in} = \begin{bmatrix} \tilde{Y}_{max} - \phi x_0 - \xi \tilde{w} \\ -\tilde{Y}_{min} + \phi x_0 + \xi \tilde{w} \\ \delta \tilde{U}_{max} \\ \delta \tilde{U}_{max} \\ \delta U_0 + U_{-1} \\ \delta U_0 - U_{-1} \end{bmatrix} \quad\quad [11]$$

où $\tilde{Y}_{max}$ et $\tilde{Y}_{min}$ sont les paramètres de sortie $\tilde{Y}$ maximal et minimal pour la période $T_{totale}$, $\delta \tilde{U}_{max}$ est la variation de commande maximale permise entre deux instants k et k+1, $\delta U_0$ est la variation de commande maximale permise au premier instant, et $U_{-1}$ est la dernière commande appliquée. En pratique et dans l'exemple considéré, la première itération déclenche, à un instant $t_0$, la formulation du problème d'optimisation pour une période $T_{totale}$ de vingt-quatre heures s'étendant de $t_0$ à $t_0 + T_{totale}$. Lors de cette itération et à l'aide des prévisions sur les puissances produites et consommées du système 2, les commandes optimales à effectuer pendant les vingt-quatre prochaines heures sont calculées de manière à satisfaire la fonction objectif $f(\hat{U})$ du problème d'optimisation. Cette fonction objectif $f(\tilde{U})$ dépendant des souhaits de l'utilisateur est déterminée, par exemple, de manière à réduire la facture d'électricité, à minimiser les émissions de $CO_2$, à vendre au meilleur moment son énergie produite, ou encore à favoriser l'utilisation de la totalité de l'énergie produite localement.

Lors de l'étape 2500, l'unité 18 résout le problème défini lors de l'étape 2400 à l'aide d'un solveur de problèmes de programmation linéaire.

On obtient ainsi la matrice de commande $\tilde{U}$ recherchée pour satisfaire pendant vingt-quatre heures les objectifs de répartition définis dans le problème d'optimisation à travers la fonction objectif.

Lors de l'étape 2600, l'unité 18 envoie les consignes 221 de puissances à l'unité d'asservissement 230 qui, à l'aide des mesures de puissances 231 du système 2, applique des commandes de puissances régulées jusqu'au prochain instant d'actualisation, c'est-à-dire pendant dix minutes. On itère la phase 2000 toutes les dix minutes de manière à ce que les prédictions réalisées lors de l'étape 2300 soient les plus proches possible de la réalité.

Ainsi, après la première itération, l'unité 18 formule le problème d'optimisation à un instant $t_1 = t_0 + T_{actu}$. En particulier, dans l'étape 2400, l'unité 18 formule le problème d'optimisation pour une période temporelle $T'_{total}$ de vingt-quatre heures allant de $t_1$ à $t_0 + t_{acu} + T_{totale}$. A chaque itération, l'instant de calcul t est décalé de $T_{actu}$ et la période de vingt-quatre heures est décalée d'autant.

Le procédé permet ainsi, toutes les dix minutes, de trouver les commandes optimales de répartition des flux énergétiques du système 2 afin de résoudre le problème d'optimisation sous contraintes défini dans l'étape 2400. Ainsi, le procédé prend en compte les spécificités propres à chaque élément 4, 8, 10, 11, 14 du système 2 et leur évolution au cours du temps pour offrir la commande la plus appropriée.

Hormis éventuellement la première étape 1100, toutes les étapes 1200, 1300, 1400, 2100, 2200, 2300, 2400, 2500, 2600 du procédé de répartition du flux d'énergie électrique sont réalisées de manière automatique par l'unité de supervision 18.

On conçoit ainsi que le système de répartition paramétrable est plus précis, adaptable et convient à un système comprenant une diversité de sources et de types de production d'énergie électrique.

Dans le mode de réalisation décrit, la durée de la période temporelle $T_{totale}$, la durée de la période d'actualisation $T_{actu,}$ et l'écart entre deux instants k et k+1 ont été arbitrairement fixées respectivement à vingt-quatre heures, dix minutes, et une minute. Elles peuvent prendre d'autres valeurs.

Le mode de réalisation choisi se base sur un système 2 comprenant un réseau, d'une source locale d'énergie, un bâtiment et un véhicule électrique muni d'une batterie d'accumulateurs. En variante, le système 2 peut ne pas comprendre de véhicule et comprendre uniquement un (ou plusieurs) élément(s) de stockage 11 directement raccordé(s) au répartiteur 16. Dans ce cas, l'élément de stockage 11 peut être fixe et, par exemple, situé dans un autre élément du système 2 tel que le bâtiment 4. Dans d'autres variantes, le système 2 peut comprendre un ou plusieurs des éléments 4, 8, 10, 11, 14 du système selon toute combinaison techniquement admissible.

**Revendications**

1. Procédé (1000, 2000) de répartition, au cours d'une période temporelle donnée ($T_{totale}$), des flux d'énergie électrique (E'4, E8, E10, E'10, E14, E'14) au sein d'un système (2) comprenant :

- au moins un élément producteur et un élément consommateur d'énergie électrique parmi les éléments suivants :

> - un réseau (14) de distribution d'énergie électrique apte à fournir et/ou recevoir de l'énergie des autres éléments (4, 8, 10) du système (2),
> - un élément de stockage (11) d'énergie électrique apte à recevoir la production d'énergie (E8, E14) des éléments (8, 14) producteurs du système (2) et/ou à fournir de l'énergie (E10) aux éléments (4, 14) consommateurs d'énergie du système (2),
> - un bâtiment (4) apte à consommer une énergie (E8, E10, E14) produite localement et/ou issue du réseau (14) de distribution et/ou issue d'un élément de stockage (11),
> - une source (8) de production locale d'énergie électrique apte à fournir de l'énergie au réseau (14) et/ou au bâtiment (4) et/ou à l'élément de stockage (11), et

- des moyens de mesure (18) de l'état de charge de chaque élément de stockage (11) et des puissances électriques produites et consommées par chacun des éléments (4, 8, 10, 14) du système (2),

**caractérisé en ce que** le procédé comprend au moins les étapes suivantes :

- des étapes (1100, 1200, 1300, 1400) d'initialisation consistant à :

> a) définir (1100) des paramètres physiques (212) de modélisation du système, les paramètres physiques étant des grandeurs physiques dimensionnant la consommation ou la production en énergie de l'élément producteur et de l'élément consommateur,
> b) définir (1200) un modèle du système, sous forme de représentation d'état en utilisant les paramètres physiques (212) déterminés à l'étape a), le modèle du système étant défini avec la représentation d'état suivante :

$$\begin{cases} x_{k+1} = Ax_k + Bu_k + Gw_k \\ y_k = Cx_k + Du_k + Fw_k \end{cases}$$

> où $x_k$ et $x_{k+1}$ sont les états x du système à des instants k et k+1, $y_k$ est un paramètre y de sortie du procédé à l'instant k, $u_k$ est un paramètre de commande u à l'instant k, $w_k$ est un paramètre de perturbation w à l'instant k et A, B, G, C, D, F sont des matrices constantes,
> c) définir (1300) des paramètres d'optimisation (213) pour la résolution d'un problème d'optimisation, et
> d) prédéfinir (1400) le problème d'optimisation, sur la période temporelle donnée ($T_{totale}$), pour la répartition des flux d'énergie électrique (E'4, E8, E10, E'10, E14, E'14) du système 2 en utilisant le modèle défini à l'étape b), la prédéfinition du problème d'optimisation consistant à modéliser le comportement du système pour la période temporelle ($T_{totale}$) donnée en utilisant l'équation suivante :

$$\tilde{Y} = \phi x_0 + \psi \tilde{U} + \xi \tilde{w}$$

> où $x_0$ est un état initial du système, $\tilde{Y}$, $\tilde{U}$ et $\hat{w}$ sont respectivement des paramètres de sortie, de commande et de perturbation du système sur la période temporelle ($T_{totale}$) donnée exprimés sous forme matricielle, et $\Phi$, $\psi$ et $\xi$ sont des matrices constantes dont les éléments dépendent des matrices constantes A, B, G, C, D et F, et

- des étapes (2200, 2300, 2400, 2500, 2600) itératives consistant, à des instants d'actualisation successifs ($t_0$, $t_0+T_{actu}$, $t_0+2T_{actu}$, ...) de la période temporelle donnée ($T_{totale}$) à :

> e) mesurer (2200) un état de charge (x) de chaque élément de stockage (11) de l'énergie électrique, ainsi que des puissances de production et de consommation en énergie électrique (E'4, E8, E10, E'10, E14, E'14) des différents éléments (4, 8, 10, 14) du système (2),
> f) actualiser (2300) une prévision du comportement des éléments producteurs et consommateurs (4, 8, 10, 14) du système (2) sur une autre période temporelle ($T'_{total}$) de même durée que la durée de la période

temporelle donnée ($T_{totale}$) et commençant à un instant d'actualisation considéré ($t_0$, $t_0 + T_{actu}$, $t_0 + 2T_{actu}$, ...),

g) définir (2400) la formulation du problème d'optimisation sur l'autre période temporelle ($T'_{total}$), la formulation du problème d'optimisation comprenant au moins la définition d'une fonction objectif $f(\tilde{U})$ ainsi que la mise à jour de contraintes du problème d'optimisation, ces contraintes étant exprimées sous la forme de l'inégalité suivante :

$$A_{in}\tilde{U} \leq b_{in}$$

où $\tilde{U}$ est le paramètre de commande sur le période temporelle donnée, $A_{in}$ une matrice dépendante de la matrice $\psi$ et $b_{in}$ une matrice dépendante des matrices $\psi$ et $\xi$, des valeurs minimales $\tilde{Y}_{min}$ et maximale $\tilde{Y}_{max}$ du paramètre de sortie $\tilde{Y}$, et d'une variation maximale $\delta\tilde{U}_{max}$ de la commande $\tilde{U}$,

h) résoudre (2500) le problème de l'étape g) en utilisant un solveur, et

i) appliquer (2600) des commandes (u) de répartition d'énergie électriques dans le système (2) en utilisant les solutions de l'étape h), jusqu'à l'itération suivante.

2. Procédé selon la revendication 1, **caractérisé en ce que** l'étape a) comprend la définition de paramètres permettant de déterminer un profil de production et/ou de consommation d'au moins un élément (4, 8, 10, 14) du système (2) sur la période temporelle ($T_{totale}$).

3. Procédé selon l'une des revendications précédentes, **caractérisé en ce que** l'étape c) de définition des paramètres d'optimisation (213) comprend au moins la définition de la période temporelle ($T_{totale}$) et d'une période d'actualisation ($T_{actu}$) définissant la durée entre deux étapes itératives.

4. Procédé selon l'une des revendications précédentes, **caractérisé en ce que** les matrices $\phi$, $\psi$ et $\xi$ sont définies respectivement par les équations suivantes :

$$\phi = \begin{bmatrix} C \\ CA \\ CA^2 \\ \vdots \\ CA^N \end{bmatrix} \qquad \psi = \begin{bmatrix} D & 0 & \cdots & \cdots & \cdots & 0 \\ CB & D & \ddots & & & \vdots \\ CAB & CB & \ddots & \ddots & & \vdots \\ \vdots & \ddots & \ddots & \ddots & \ddots & \vdots \\ \vdots & & \ddots & \ddots & \ddots & 0 \\ CA^{N-1}B & \cdots & \cdots & CAB & CB & D \end{bmatrix}$$

$$\xi = \begin{bmatrix} F & 0 & \cdots & \cdots & \cdots & 0 \\ CG & F & \ddots & & & \vdots \\ CAG & GF & \ddots & \ddots & & \vdots \\ \vdots & \ddots & \ddots & \ddots & \ddots & \vdots \\ \vdots & & \ddots & \ddots & \ddots & 0 \\ CA^{N+1}G & \cdots & \cdots & CAG & CG & F \end{bmatrix}.$$

5. Procédé selon l'une des revendications précédentes, **caractérisé en ce que** l'état x du système correspond à l'état de charge de chaque élément de stockage (11) de l'énergie électrique.

6. Procédé selon l'une des revendications précédentes, **caractérisé en ce que** le paramètre de commande u est défini selon le vecteur suivant :

$$u = \begin{bmatrix} P_{ch\arg e}^{M_{11}} & P_{dech\arg e}^{M_{11}} & P_{achat}^{M_{14}} & P_{revente}^{M_{14}} & P_{localCons}^{M_8} \end{bmatrix}^T$$

où $P_{ch\arg e}^{M_{11}}$ et $P_{dech\arg e}^{M_{11}}$ sont respectivement des puissances de charge et de décharge correspondant à chaque élément de stockage (11), $P_{achat}^{M_{14}}$ et $P_{revente}^{M_{14}}$ sont respectivement des puissances achetées et vendues correspondant à chaque réseau de distribution (14) et où $P_{localCons}^{M_8}$ correspond aux puissances locales produites par chaque élément (8, 10) du système (2) et consommées localement.

7. Procédé selon l'une des revendications précédentes, **caractérisé en ce que** le paramètre de perturbation w est défini selon vecteur suivant :

$$w = \begin{bmatrix} P_{prod}^{M_8} & E_{vehicule}^{M_{10}} \end{bmatrix}^T$$

où $P_{prod}^{M_8}$ correspond aux puissances électriques produites localement par chaque source (8) de production locale, et $E_{vehicule}^{M_{10}}$ correspond aux énergies consommées par chaque véhicule (10) électrique incorporant un ou plusieurs éléments de stockage (11), lorsque ces éléments ne sont pas raccordés au reste du système 2.

8. Procédé selon l'une des revendications précédentes, **caractérisé en ce que** le paramètre de sortie du système est défini selon le vecteur suivant

$$y = \begin{bmatrix} P_{b\hat{a}timent}^{M_4} & x & 0 \end{bmatrix}^T$$

où $P_{b\hat{a}timent}^{M_4}$ correspond à la puissance fournie à chaque bâtiment (4), et x correspond aux états de charges de chaque élément de stockage (11).

9. Procédé selon l'une des revendications précédentes, **caractérisé en ce que** la matrice $A_{in}$ est définie selon l'équation suivante :

$$A_{in} = \begin{bmatrix} \psi \\ -\psi \\ D_{T_{totale}+1} \\ -D_{T_{totale}+1} \\ \begin{bmatrix} I_{N_u} & O_{N_u \times N_u \cdot T_{totale}} \end{bmatrix} \\ \begin{bmatrix} -I_{Nu} & O_{N_u \times N_u \cdot T_{totale}} \end{bmatrix} \end{bmatrix} \quad \text{avec } D_{T_{totale}+1} = \begin{bmatrix} I_{N_u} & -I_{N_u} & 0_{N_u} & \cdots & \cdots & 0_{N_u} \\ 0_{N_u} & I_{N_u} & -I_{N_u} & & & \vdots \\ \vdots & \ddots & \ddots & \ddots & & \vdots \\ \vdots & & \ddots & \ddots & \ddots & 0_{N_u} \\ 0_{N_u} & \cdots & \cdots & 0_{N_u} & I_{N_u} & -I_{N_u} \end{bmatrix}$$

et $I_{N_u}$ est une matrice identité de dimension $N_u$, $0_{N_u \times N_u \cdot T_{totale}}$ est une matrice nulle comprenant $N_u$ lignes et $N_u \cdot T_{totale}$ colonnes, $N_u$ étant le nombre de commandes du paramètre $\tilde{U}$,
et **en ce que** la matrice $b_{in}$ est définie selon l'équation suivante :

$$b_{in} = \begin{bmatrix} \tilde{Y}_{max} - \phi x_0 - \xi \tilde{w} \\ -\tilde{Y}_{min} + \phi x_0 + \xi \tilde{w} \\ \delta \tilde{U}_{max} \\ \delta \tilde{U}_{max} \\ \delta U_0 + U_{-1} \\ \delta U_0 - U_{-1} \end{bmatrix}$$

où et $\tilde{Y}_{min}$ sont les paramètres de sortie $\tilde{Y}$ maximal et minimal pour la période $T_{totale}$, $\delta \tilde{U}_{max}$ est la variation de commande maximale permise entre deux instants k et k+1, $\delta U_0$ est la variation de commande maximale permise au premier instant, et $U_{-1}$ est la dernière commande appliquée.

10. Procédé selon l'une des revendications précédentes, **caractérisé en ce que** l'étape f) d'actualisation de la prévision du comportement des éléments producteurs et consommateurs consiste à la mise à jour des profils de production et de consommation d'énergie pour chacun des éléments (4, 8, 10, 14) du système (2), et à la mise à jour de contraintes portant sur le paramètre de commande ($\tilde{U}$), sur le paramètre de sortie ($\tilde{Y}$), sur le paramètre de perturbation ($\tilde{w}$), ainsi que sur une variation ($\delta \tilde{U}$) entre deux matrices $\tilde{U}$ calculées à deux instants consécutifs k et k+1.

11. Dispositif de répartition, au cours d'une période temporelle donnée ($T_{totale}$), des flux d'énergie électrique (E'4, E8, E10, E'10, E14, E'14) au sein d'un système (2) comprenant :

- au moins un élément producteur et un élément consommateur d'énergie électrique parmi les éléments suivants :

- un réseau (14) de distribution d'énergie électrique apte à fournir et/ou recevoir de l'énergie des autres éléments (4, 8, 10) du système (2),
- un élément de stockage (11) d'énergie électrique apte à recevoir la production d'énergie (E8, E14) des éléments (8, 14) producteurs d'énergie du système (2) et/ou à fournir de l'énergie (E10) aux éléments (4, 14) consommateurs d'énergie du système (2),
- un bâtiment (4) apte à consommer une énergie (E8, E10, E14) produite localement et/ou issue du réseau (14) de distribution et/ou issue d'un élément de stockage (11),
- une source (8) de production locale d'énergie électrique apte à fournir de l'énergie au réseau (11) et/ou au bâtiment (4) et/ou à l'élément de stockage (11), et

- des moyens de mesure (18) de l'état de charge de chaque élément de stockage (11) et des puissances électriques produites et consommées par chacun des éléments (4, 8, 10, 14) du système (2),

**caractérisé en ce que** ce dispositif de répartition comprend des moyens de calculs configurés pour en oeuvre au moins :

- des étapes (1100, 1200, 1300, 1400) d'initialisation consistant à :

a) définir (1100) des paramètres physiques (212) de modélisation du système, les paramètres physiques étant des grandeurs physiques dimensionnant la consommation ou la production en énergie de l'élément producteur et de l'élément consommateur,
b) définir (1200) un modèle du système, sous forme de représentation d'état en utilisant les paramètres physiques (212) déterminés à l'étape a), le modèle du système étant défini avec la représentation d'état suivante :

$$\begin{cases} x_{k+1} = Ax_k + Bu_k + Gw_k \\ y_k = Cx_k + Du_k + Fw_k \end{cases}$$

où $x_k$ et $x_{k+1}$ sont les états x du système à des instants k et k+1, $y_k$ est un paramètre y de sortie du procédé à l'instant k, $u_k$ est un paramètre de commande u à l'instant k, $w_k$ est un paramètre de perturbation w à l'instant k et A, B, G, C, D, F sont des matrices constantes.

c) définir (1300) des paramètres d'optimisation (213) pour la résolution d'un problème d'optimisation, et

d) prédéfinir (1400) le problème d'optimisation, sur la période temporelle ($T_{totale}$) donnée, pour la répartition des flux d'énergie (E'4, E8, E10, E'10, E14, E'14) électrique du système (2) en utilisant le modèle défini à l'étape b), la prédéfinition du problème d'optimisation consistant à modéliser le comportement du système pour la période temporelle ($T_{totale}$) donnée en utilisant l'équation suivante :

$$\tilde{Y} = \phi x_0 + \psi \tilde{U} + \xi \tilde{w}$$

où $x_0$ est un état initial du système, $\tilde{Y}$, $\tilde{U}$ et $\hat{w}$ sont respectivement des paramètres de sortie, de commande et de perturbation du système sur la période temporelle ($T_{totale}$) donnée exprimés sous forme matricielle, et $\Phi$, $\psi$ et $\xi$ sont des matrices constantes dont les éléments dépendent des matrices constantes A, B, G, C, D et F et

- des étapes (2200, 2300, 2400, 2500, 2600) itératives consistant, à des instants d'actualisation successifs ($t_0$, $t_0+T_{totale}$, ...) de la période temporelle ($T_{totale}$) donnée, à :

e) mesurer (2200) l'état de charge (x) de chaque élément de stockage (11) de l'énergie électrique ainsi que des puissances de production et de consommation en énergie électrique des différents éléments (4, 8, 10, 14) du système (2),

f) actualiser (2300) une prévision du comportement des éléments producteurs et consommateurs (4, 8, 10, 14) du système (2) sur une autre période temporelle ($T'_{total}$) de même durée que la durée de la période temporelle ($T_{totale}$) donnée et commençant à un instant d'actualisation ($t_0$, to + $T_{actu}$, to + 2$T_{actu}$, ...) considéré,

g) définir (2400) la formulation du problème d'optimisation sur l'autre période ($T'_{total}$) temporelle, la formulation du problème d'optimisation comprenant au moins la définition d'une fonction objectif f($\tilde{U}$) ainsi que la mise à jour de contraintes du problème d'optimisation, ces contraintes étant exprimées sous la forme de l'inégalité suivante :

$$A_{in}\tilde{U} \leq b_{in}$$

où $\tilde{U}$ est le paramètre de commande sur le période temporelle donnée, $A_{in}$ une matrice dépendante de la matrice $\psi$ et $b_{in}$ une matrice dépendante des matrices $\psi$ et $\xi$, des valeurs minimales $\tilde{Y}_{min}$ et maximale $\tilde{Y}_{max}$ du paramètre de sortie $\tilde{Y}$, et d'une variation maximale $\delta\tilde{U}_{max}$ de la commande $\tilde{U}$,

h) résoudre (2500) le problème de l'étape g) en utilisant un solveur, et

i) appliquer (2600) des commandes de répartition d'énergie électriques dans le système en utilisant les solutions de l'étape h), jusqu'à l'itération suivante.

**12.** Dispositif selon la revendication 11, **caractérisé en ce que** l'élément de stockage comprend au moins une batterie (11) d'accumulateurs disposée sur un véhicule (10) électrique.

**13.** Système électrique (2) incorporant au moins :

- un élément producteur et un élément consommateur d'énergie électrique parmi les éléments suivants :

- un réseau (14) de distribution d'énergie électrique apte à fournir et/ou recevoir de l'énergie des autres éléments (4, 8, 10) du système (2),

- un élément de stockage (11) d'énergie électrique apte à recevoir la production d'énergie (E8, E14) des éléments (8, 14) producteurs d'énergie du système (2) et/ou à fournir de l'énergie (E10) aux éléments (4, 14) consommateurs d'énergie du système (2),

- un bâtiment (4) apte à consommer une énergie (E8, E10, E14) produite localement et/ou issue du réseau (14) de distribution et/ou issue d'un élément de stockage,

- une source (8) de production locale d'énergie électrique apte à fournir de l'énergie au réseau (14) et/ou au bâtiment (4) et/ou à l'élément de stockage (11), et

- des moyens de mesure (18) de l'état de charge de chaque élément de stockage (11) et des puissances électriques produites et consommées par chacun des éléments (4, 8, 10, 14) du système (2),

**caractérisé en ce que** ce système (2) comprend un dispositif de répartition (20) selon l'une des revendications 11 à 12 et **en ce que** le réseau (14) de distribution d'énergie électrique est apte à communiquer dynamiquement (S14, S'14) avec le dispositif de répartition (20), notamment sur les prix de rachat et de vente de l'énergie et/ou la puissance disponible du réseau de distribution et/ou la présence d'heures creuses d'utilisation de l'énergie du réseau.

**Patentansprüche**

1. Verfahren (1000, 2000) zur Verteilung, und zwar im Verlauf eines bestimmten Zeitraums ($T_{totale}$), von Flüssen elektrischer Energie (E'4, E8, E10, E'10, E14, E'14) in einem System (2), Folgendes umfassend:

- mindestens ein Erzeugerelement und ein Verbraucherelement elektrischer Energie aus den folgenden Elementen:

- ein Netz (14) zur Verteilung elektrischer Energie, das Energie an/von andere/n Elemente/n (4, 8, 10) des Systems (2) liefern und/oder empfangen kann,
- ein Speicherelement (11) für elektrische Energie, das die erzeugte Energie (E8, E14) von den Erzeugungselementen (8, 14) des Systems (2) empfangen und/oder die Energie (E10) an die Energieverbraucherelemente (4, 14) des Systems (2) liefern kann,
- ein Gebäude (4), das eine Energie (E8, E10, E14) verbrauchen kann, die lokal erzeugt wird und/oder vom Verteilungsnetz (14) ausgegeben wird und/oder von einem Speicherelement (11) ausgegeben wird,
- eine lokale Erzeugungsquelle (8) elektrischer Energie, welche Energie an das Netz (14) und/oder das Gebäude (4) und/oder an das Speicherelement (11) liefern kann, und
- Messeinrichtungen (18) für den Ladezustand jedes Speicherelements (11) und der elektrischen Leistungen, die von jedem der Elemente (4, 8, 10, 14) des Systems (2) erzeugt und verbraucht werden,

**dadurch gekennzeichnet, dass** das Verfahren mindestens die folgenden Schritte umfasst:

- Initialisierungsschritte (1100, 1200, 1300, 1400), die darin bestehen:

a) physikalische Parameter (212) zur Modellierung des Systems zu definieren (1100), wobei die physikalischen Parameter physikalische Größen sind, welche den Verbrauch oder die Erzeugung an Energie des Erzeugerelements und des Verbraucherelements dimensionieren,
b) ein Modell des Systems in Form einer Zustandsdarstellung unter Nutzung der im Schritt a) bestimmten physikalischen Parameter (212) zu definieren (1200), wobei das Modell des Systems mit der folgenden Zustandsdarstellung definiert wird:

$$\begin{cases} x_{k+1} = Ax_k + Bu_k + Gw_k \\ y_k = Cx_k + Du_k + Fw_k \end{cases}$$

worin $x_k$ und $x_{k+1}$ die Zustände x des Systems zu den Zeitpunkten k und k+1 sind, $y_k$ ein Ausgangsparameter y des Verfahrens zum Zeitpunkt k ist, $u_k$ ein Steuerungsparameter u zum Zeitpunkt k ist, $w_k$ ein Störungsparameter w zum Zeitpunkt k ist, und A, B, G, C, D, F konstante Matrizen sind,
c) Optimierungsparameter (213) zur Lösung eines Optimierungsproblems zu definieren (1300), und
d) das Optimierungsproblem über den bestimmten Zeitraum ($T_{totale}$) zur Verteilung der Flüsse elektrischer Energie (E'4, E8, E10, E'10, E14, E'14) des Systems (2) unter Nutzung des im Schritt b) definierten Modells vorzudefinieren (1400), wobei die Vordefinierung des Optimierungsproblems darin besteht, das Verhalten des Systems für den bestimmten Zeitraum ($T_{totale}$) unter Nutzung der folgenden Gleichung zu modellieren:

$$\tilde{Y} = \phi x_0 + \psi \tilde{U} + \xi \tilde{w}$$

worin $x_0$ ein Anfangszustand des Systems ist, $\tilde{Y}$, $\tilde{U}$ und $\hat{\mathbf{w}}$ Ausgangs-, Steuerungs- bzw. Störungsparameter des Systems über den bestimmten Zeitraum ($T_{totate}$) in Matrixform ausgedrückt sind, und $\Phi$, $\psi$ und $\xi$ konstante Matrizen sind, deren Elemente von den konstanten Matrizen A, B, G, C, D und F abhängen, und

- iterative Schritte (2200, 2300, 2400, 2500, 2600), die darin bestehen, zu aufeinanderfolgenden Aktualisierungszeitpunkten ($t_0$, $t_0+T_{actu}$, $t_0+2T_{actu}$,) des bestimmten Zeitraums ($T_{totale}$):

e) einen Ladezustand (x) jedes Speicherelements (11) elektrischer Energie sowie Erzeugungs- und Verbrauchsleistungen an elektrischer Energie (E'4, E8, E10, E'10, E14, E'14) der verschiedenen Elemente (4, 8, 10, 14) des Systems (2) zu messen (2200),

f) eine Prognose des Verhaltens der Erzeuger- und Verbraucherelemente (4, 8, 10, 14) des Systems (2) über einen anderen Zeitraum ($T'_{total}$) zu aktualisieren (2300), der dieselbe Dauer wie der bestimmte Zeitraum ($T_{totale}$) hat und zu einem in Erwägung gezogenen Aktualisierungszeitpunkt ($t_0$, $t_0+T_{actu}$, $t_0+2T_{actu}$,) beginnt,

g) die Formulierung des Optimierungsproblems über den anderen Zeitraum ($T'_{total}$) zu definieren (2400), wobei die Formulierung des Optimierungsproblems zumindest die Definition einer Zielfunktion $f(\tilde{U})$ sowie die Aktualisierung von Zwangsbedingungen des Optimierungsproblems umfasst, wobei diese Zwangsbedingungen in Form der folgenden Ungleichung ausgedrückt werden:

$$A_{in} \tilde{U} \le b_{in}$$

worin $\tilde{U}$ der Steuerungsparameter über den bestimmten Zeitraum ist, $A_{in}$ eine von der Matrix $\Psi$ abhängige Matrix und $b_{in}$ eine von den Matrizen $\Psi$ und $\xi$, den Mindestwerten Ymin und Höchstwerten $\tilde{Y}$max des Ausgangsparameters $\tilde{Y}$ und von einer maximalen Veränderung $\delta\tilde{U}_{max}$ der Steuerung $\tilde{U}$ abhängige Matrix ist,

h) das Problem des Schritts g) unter Nutzung eines Gleichungslösers zu lösen (2500), und

i) Steuerungen (u) zur Verteilung elektrischer Energie im System (2) unter Nutzung der Lösungen des Schritts h) bis zur folgenden Iteration anzuwenden (2600).

2. Verfahren nach Anspruch 1, **dadurch gekennzeichnet, dass** der Schritt a) die Definition von Parametern umfasst, die es ermöglichen, ein Erzeugungs- und/oder Verbrauchsprofil mindestens eines Elements (4, 8, 10, 14) des Systems (2) über den Zeitraum ($T_{totale}$) zu bestimmen.

3. Verfahren nach einem der vorhergehenden Ansprüche, **dadurch gekennzeichnet, dass** der Schritt c) zur Definition der Optimierungsparameter (213) zumindest die Definition des Zeitraums ($T_{totale}$) und eines Aktualisierungszeitraums ($T_{actu}$) umfasst, welcher die Dauer zwischen zwei iterativen Schritten definiert.

4. Verfahren nach einem der vorhergehenden Ansprüche, **dadurch gekennzeichnet, dass** die Matrizen Ø, $\Psi$ und $\xi$ jeweils durch die folgenden Gleichungen definiert werden:

$$\phi = \begin{bmatrix} C \\ CA \\ CA^2 \\ \vdots \\ CA^N \end{bmatrix} \qquad \psi = \begin{bmatrix} D & 0 & \cdots & \cdots & \cdots & 0 \\ CB & D & \ddots & & & \vdots \\ CAB & CB & \ddots & \ddots & & \vdots \\ \vdots & \ddots & \ddots & \ddots & \ddots & \vdots \\ \vdots & & \ddots & \ddots & \ddots & 0 \\ CA^{N-1}B & \cdots & \cdots & CAB & CB & D \end{bmatrix}$$

$$\xi = \begin{bmatrix} F & 0 & \cdots & \cdots & \cdots & 0 \\ CG & F & & & & \vdots \\ CAG & GF & & & & \vdots \\ \vdots & & & & & \\ \vdots & & & & & 0 \\ CA^{N+1}G & \cdots & \cdots & CAG & CG & F \end{bmatrix} .$$

**5.** Verfahren nach einem der vorhergehenden Ansprüche, **dadurch gekennzeichnet, dass** der Zustand x des Systems dem Ladezustand jedes Speicherelements (11) elektrischer Energie entspricht.

**6.** Verfahren nach einem der vorhergehenden Ansprüche, **dadurch gekennzeichnet, dass** der Steuerungsparameter u gemäß dem folgenden Vektor definiert wird:

$$u = \begin{bmatrix} P_{charge}^{M_{11}} & P_{decharge}^{M_{11}} & P_{achat}^{M_{14}} & P_{revente}^{M_{14}} & P_{localCons}^{M_{8}} \end{bmatrix}^{T}$$

worin $P_{charge}^{M_{11}}$ und $P_{decharge}^{M_{11}}$ Lade- bzw. Entladeleistungen sind, die jedem Speicherelement (11) entsprechend,

$P_{achat}^{M_{14}}$ und $P_{revente}^{M_{14}}$ zugekaufte bzw. verkaufte Leistungen sind, die jedem Verteilungsnetz (14) entsprechen, und worin $P_{localCons}^{M_{8}}$ den lokalen Leistungen entspricht, die von jedem Element (8, 10) des Systems (2) erzeugt und lokal verbraucht werden.

**7.** Verfahren nach einem der vorhergehenden Ansprüche, **dadurch gekennzeichnet, dass** der Störungsparameter w gemäß dem folgenden Vektor definiert wird:

$$w = \begin{bmatrix} P_{prod}^{M_{8}} & E_{vehicule}^{M_{10}} \end{bmatrix}^{T}$$

worin $P_{prod}^{M_{8}}$ den elektrischen Leistungen entspricht, die von jeder lokalen Erzeugungsquelle erzeugt werden, und

$E_{vehicule}^{M_{10}}$ den Energien entspricht, die von jedem Elektrofahrzeug (10), das ein oder mehrere Speicherelement/e (11) eingebaut hat, verbraucht werden, wenn diese Elemente nicht an den Rest des Systems (2) angeschlossen sind.

**8.** Verfahren nach einem der vorhergehenden Ansprüche, **dadurch gekennzeichnet, dass** der Ausgangsparameter des Systems gemäß dem folgenden Vektor definiert wird:

$$y = \begin{bmatrix} P_{bâtiment}^{M_{4}} & x & 0 \end{bmatrix}^{T}$$

worin $P_{bâtiment}^{M_{4}}$ der Leistung entspricht, die jedem Gebäude (4) geliefert wird, und x den Ladezuständen jedes Speicherelements (11) entspricht.

**9.** Verfahren nach einem der vorhergehenden Ansprüche, **dadurch gekennzeichnet, dass** die Matrix A$_{in}$ gemäß der folgenden Gleichung definiert wird:

$$A_{in} = \begin{bmatrix} \psi \\ -\psi \\ D_{T_{totale}+1} \\ -D_{T_{totale}+1} \\ \begin{bmatrix} I_{N_u} & O_{N_u \times N_u \cdot T_{totale}} \end{bmatrix} \\ \begin{bmatrix} -I_{N_u} & O_{N_u \times N_u \cdot T_{totale}} \end{bmatrix} \end{bmatrix} \quad \text{avec } D_{T_{totale}+1} = \begin{bmatrix} I_{N_u} & -I_{N_u} & 0_{N_u} & \cdots & \cdots & 0_{N_u} \\ 0_{N_u} & I_{N_u} & -I_{N_u} & & & \vdots \\ \vdots & & \ddots & \ddots & & \vdots \\ \vdots & & & \ddots & \ddots & 0_{N_u} \\ 0_{N_u} & \cdots & \cdots & 0_{N_u} & I_{N_u} & -I_{N_u} \end{bmatrix}$$

und $I_{N_u}$ eine Dimensionsidentitätsmatrix N$_u$ ist, $0_{N_u \times N_u \cdot T_{totale}}$ eine Nullmatrix mit N$_u$ Zeilen und $N_u \cdot T_{totale}$ Spalten ist, wobei N$_u$ die Anzahl an Steuerungen des Parameters Ũ ist,
und dass die Matrix b$_{in}$ gemäß der folgenden Gleichung definiert wird:

$$b_{in} = \begin{bmatrix} \tilde{Y}_{max} - \phi x_0 - \varsigma \tilde{w} \\ -\tilde{Y}_{min} + \phi x_0 + \varsigma \tilde{w} \\ \delta \tilde{U}_{max} \\ \delta \tilde{U}_{max} \\ \delta U_0 + U_{-1} \\ \delta U_0 - U_{-1} \end{bmatrix}$$

worin $\tilde{Y}_{\mathbf{max}}$ und $\tilde{Y}_{\mathbf{min}}$ die maximalen und minimalen Ausgangsparameter Ỹ für den Zeitraum T$_{totale}$ sind, und $\delta\tilde{U}_{max}$ die maximal zulässige Steuerungsveränderung zwischen zwei Zeitpunkten k und k+1 ist, $\delta U_0$ die maximal zulässige Steuerungsveränderung zum ersten Zeitpunkt ist, und $U_{-1}$ die letzte angewendete Steuerung ist.

**10.** Verfahren nach einem der vorhergehenden Ansprüche, **dadurch gekennzeichnet, dass** der Schritt f) zur Aktualisierung der Prognose des Verhaltens der Erzeuger- und Verbraucherelemente in der Aktualisierung des Energieerzeugungs- und Energieverbrauchsprofils für jedes der Elemente (4, 8, 10, 14) des Systems (2) und der Aktualisierung von Zwangsbedingungen besteht, die sich auf den Steuerungsparameter (Ũ), den Ausgangsparameter (Ỹ), den Störungsparameter (w̃) sowie auf eine Veränderung (δŨ) zwischen zwei Matrizen Ũ bezieht, die zu zwei aufeinanderfolgenden Zeitpunkten k und k+1 berechnet werden.

**11.** Vorrichtung zur Verteilung, und zwar im Verlauf eines bestimmten Zeitraums (T$_{totale}$), von Flüssen elektrischer Energie (E'4, E8, E10, E'10, E14, E'14) in einem System (2), Folgendes umfassend:

- mindestens ein Erzeugerelement und ein Verbraucherelement elektrischer Energie aus den folgenden Elementen:

- ein Netz (14) zur Verteilung elektrischer Energie, das Energie an/von andere/n Elemente/n (4, 8, 10) des Systems (2) liefern und/oder empfangen kann,
- ein Speicherelement (11) für elektrische Energie, das die erzeugte Energie (E8, E14) von den Erzeugungselementen (8, 14) des Systems (2) empfangen und/oder Energie (E10) an die Energieverbraucherelemente (4, 14) des Systems (2) liefern kann,
- ein Gebäude (4), das eine Energie (E8, E10, E14) verbrauchen kann, die lokal erzeugt wird und/oder vom Verteilungsnetz (14) ausgegeben wird und/oder von einem Speicherelement (11) ausgegeben wird,

- eine lokale Erzeugungsquelle (8) elektrischer Energie, welche Energie an das Netz (14) und/oder das Gebäude (4) und/oder an das Speicherelement (11) liefern kann, und
- Messeinrichtungen (18) für den Ladezustand jedes Speicherelements (11) und der elektrischen Leistungen, die von jedem der Elemente (4, 8, 10, 14) des Systems (2) erzeugt und verbraucht werden,

**dadurch gekennzeichnet, dass** die Verteilungsvorrichtung Berechnungseinrichtungen umfasst, die dazu konfiguriert sind, zumindest Folgendes umzusetzen:

- Initialisierungsschritte (1100, 1200, 1300, 1400), die darin bestehen:

a) physikalische Parameter (212) zur Modellierung des Systems zu definieren (1100), wobei die physikalischen Parameter physikalische Größen sind, welche den Verbrauch oder die Erzeugung an Energie des Erzeugerelements und des Verbraucherelements dimensionieren,
b) ein Modell des Systems in Form einer Zustandsdarstellung unter Nutzung der im Schritt a) bestimmten physikalischen Parameter (212) zu definieren (1200), wobei das Modell des Systems mit der folgenden Zustandsdarstellung definiert wird:

$$\begin{cases} x_{k+1} = Ax_k + Bu_k + Gw_k \\ y_k = Cx_k + Du_k + Fw_k \end{cases}$$

worin $x_k$ und $x_{k+1}$ die Zustände x des Systems zu den Zeitpunkten k und k+1 sind, $y_k$ ein Ausgangsparameter y des Verfahrens zum Zeitpunkt k ist, $u_k$ ein Steuerungsparameter u zum Zeitpunkt k ist, $w_k$ ein Störungsparameter w zum Zeitpunkt k ist, und A, B, G, C, D, F konstante Matrizen sind,
c) Optimierungsparameter (213) zur Lösung eines Optimierungsproblems zu definieren (1300), und
d) das Optimierungsproblem über den bestimmten Zeitraum ($T_{totale}$) zur Verteilung der Flüsse elektrischer Energie (E'4, E8, E10, E'10, E14, E'14) des Systems (2) unter Nutzung des im Schritt b) definierten Modells vorzudefinieren (1400), wobei die Vordefinierung des Optimierungsproblems darin besteht, das Verhalten des Systems für den bestimmten Zeitraum ($T_{totale}$) unter Nutzung der folgenden Gleichung zu modellieren:

$$\tilde{Y} = \phi x_0 + \psi \tilde{U} + \xi \tilde{w}$$

worin $x_0$ ein Anfangszustand des Systems ist, $\tilde{Y}$, $\tilde{U}$ und $\hat{w}$ Ausgangs-, Steuerungs- bzw. Störungsparameter des Systems über den bestimmten Zeitraum ($T_{totale}$) in Matrixform ausgedrückt sind, und $\Phi$, $\Psi$ und $\xi$ konstante Matrizen sind, deren Elemente von den konstanten Matrizen A, B, G, C, D und F abhängen, und

- iterative Schritte (2200, 2300, 2400, 2500, 2600), die darin bestehen, zu aufeinanderfolgenden Aktualisierungszeitpunkten ($t_0$, $t_0+T_{totale}$,) des bestimmten Zeitraums ($T_{totale}$):

e) einen Ladezustand (x) jedes Speicherelements (11) elektrischer Energie sowie Erzeugungs- und Verbrauchsleistungen an elektrischer Energie der verschiedenen Elemente (4, 8, 10, 14) des Systems (2) zu messen (2200),
f) eine Prognose des Verhaltens der Erzeuger- und Verbraucherelemente (4, 8, 10, 14) des Systems (2) über einen anderen Zeitraum ($T'_{total}$) zu aktualisieren (2300), der dieselbe Dauer wie der bestimmte Zeitraum ($T_{totale}$) hat und zu einem in Erwägung gezogenen Aktualisierungszeitpunkt ($t_0$, $t_0+T_{actu}$, $t_0+2T_{actu}$,) beginnt,
g) die Formulierung des Optimierungsproblems über den anderen Zeitraum ($T'_{total}$) zu definieren (2400), wobei die Formulierung des Optimierungsproblems zumindest die Definition einer Zielfunktion f($\tilde{U}$) sowie die Aktualisierung von Zwangsbedingungen des Optimierungsproblems umfasst, wobei diese Zwangsbedingungen in Form der folgenden Ungleichung ausgedrückt werden:

$$A_{in}\tilde{U} \leq b_{in}$$

worin Ũ der Steuerungsparameter über den bestimmten Zeitraum ist, $A_{in}$ eine von der Matrix $\Psi$ abhängige Matrix und $b_{in}$ eine von den Matrizen $\Psi$ und $\xi$, den Mindestwerten Ymin und Höchstwerten Ỹmax des Ausgangsparameters Ỹ und von einer maximalen Veränderung $\delta\tilde{U}_{max}$ der Steuerung Ũ abhängige Matrix ist,
h) das Problem des Schritts g) unter Nutzung eines Gleichungslösers zu lösen (2500), und
i) Steuerungen (u) zur Verteilung elektrischer Energie im System unter Nutzung der Lösungen des Schritts h) bis zur folgenden Iteration anzuwenden (2600).

**12.** Vorrichtung nach Anspruch 11, **dadurch gekennzeichnet, dass** das Speicherelement mindestens eine Akkumulatorenbatterie (11) umfasst, die an einem Elektrofahrzeug (10) angeordnet ist.

**13.** Elektrisches System (2), das zumindest integriert hat:

- ein Erzeugerelement und ein Verbraucherelement elektrischer Energie aus den folgenden Elementen:

- ein Netz (14) zur Verteilung elektrischer Energie, das Energie an/von andere/n Elemente/n (4, 8, 10) des Systems (2) liefern und/oder empfangen kann,
- ein Speicherelement (11) für elektrische Energie, das die erzeugte Energie (E8, E14) von den Erzeugungselementen (8, 14) des Systems (2) empfangen und/oder Energie (E10) an die Energieverbraucherelemente (4, 14) des Systems (2) liefern kann,
- ein Gebäude (4), das eine Energie (E8, E10, E14) verbrauchen kann, die lokal erzeugt wird und/oder vom Verteilungsnetz (14) ausgegeben wird und/oder von einem Speicherelement ausgegeben wird,
- eine lokale Erzeugungsquelle (8) elektrischer Energie, welche Energie an das Netz (14) und/oder das Gebäude (4) und/oder an das Speicherelement (11) liefern kann, und
- Messeinrichtungen (18) für den Ladezustand jedes Speicherelements (11) und der elektrischen Leistungen, die von jedem der Elemente (4, 8, 10, 14) des Systems (2) erzeugt und verbraucht werden,

**dadurch gekennzeichnet, dass** das System (2) eine Verteilungsvorrichtung (20) nach einem der Ansprüche 11 bis 12 umfasst, und dass das Netz (14) zur Verteilung elektrischer Energie dynamisch mit der Verteilungsvorrichtung (20) insbesondere über die An- und Verkaufspreise von Energie und/oder die verfügbare Leistung des Verteilungsnetzes und/oder das Bestehen lastarmer Energienutzungsstunden des Netzes kommunizieren kann (S14, S14').

**Claims**

**1.** Method (1000, 2000) for distributing, during a given time period ($T_{totale}$), electricity flows (E'4, E8, E10, E'10, E14, E'14) in a system (2) comprising:

- at least one production element and one consumption element of electricity from the following elements:

- an electricity distribution network (14) suitable for supplying and/or receiving energy from other elements (4, 8, 10) of the system (2),
- an electricity storage element (11) suitable for receiving the energy production (E8, E14) from the production elements (8, 14) of the system (2) and/or for supplying energy (E10) to the energy consumption elements (4, 14) of the system (2),
- a building (4) suitable for consuming energy (E8, E10, E14) produced locally and/or from the distribution network (14) and/or from a storage element (11),
- a local electricity production source (8) suitable for supplying energy to the network (14) and/or building (4) and/or storage element (11), and

- means (18) for measuring the state of charge of each storage element (11) and electrical powers produced and consumed by each of the elements (4, 8, 10, 14) of the system (2),

**characterised in that** the method comprises at least the following steps:

- initialisation steps (1100, 1200, 1300, 1400) consisting of:

a) defining (1100) physical system modelling parameters (212), wherein the physical parameters are physical quantities conditioning the energy consumption or production of the production element and the consumption element,

b) defining (1200) a model of the system, in the form of state representation using the physical parameters (212) determined in step a), wherein the system model is defined with the following state representation:

$$\begin{cases} x_{k+1} = Ax_k + Bu_k + Gw_k \\ y_k = Cx_k + Du_k + Fw_k \end{cases}$$

where $x_k$ and $x_{k+1}$ are the states x of the system at times k and k+1, $y_k$ is an output parameter y of the system at the time k, $u_k$ is a control parameter at the time k, $w_k$ is a disturbance parameter w at the time k and A, B, G, C, D, F are constant matrices,

c) defining (1300) optimisation parameters (213) for solving an optimisation problem, and

d) predefining (1400) the optimisation problem, over the given time period ($T_{totale}$), for the distribution of the electricity flows (E'4, E8, E10, E'10, E14, E'14) of the system (2) using the model defined in step b), wherein predefining the optimisation problem consists of modelling the behaviour of the system for the given time period ($T_{total}$) using the following equation:

$$\tilde{Y} = \phi x_0 + \psi \tilde{U} + \xi \tilde{w}$$

where $x_0$ is an initial state of the system, Y, $\tilde{U}$ and $\hat{w}$ are power, control and disturbance parameters of the system respectively, for the given time period ($T_{total}$), expressed in matrix form, and $\Phi$, $\psi$ and $\xi$ are constant matrices wherein the elements are dependent on the constant matrices A, B, G, C, D and F, and

- iterative steps (2200, 2300, 2400, 2500, 2600) consisting, at successive updating times ($t_0$, $t_0+T_{actu}$, $t_0+2T_{actu}$, ...) of the given time period ($T_{totale}$), of:

e) measuring (2200) a state of charge (x) of each electricity storage element (11), and the electricity production and consumption powers (E'4, E8, E10, E'10, E14, E'14) of the various elements (4, 8, 10, 14) of the system (2),

f) updating (2300) a preview of the behaviour of the production and consumption elements (4, 8, 10, 14) of the system (2) for another time period ($T'_{total}$) of the same duration as the duration of the given time period ($T_{total}$) and starting at a considered updating time ($t_0$, $t_0+T_{actu}$, $t_0+2T_{actu}$, ...),

g) defining (2400) the formulation of the optimisation problem for the other time period ($T'_{total}$), wherein formulating the optimisation problem comprises at least the definition of an objective function f($\tilde{U}$) and updating of optimisation problem constraints, these constraints being expressed in the form of the following inequality:

$$A_{in} \tilde{U} \leq b_{in}$$

where $\tilde{U}$ is the control parameter for the given time period, $A_{in}$ a matrix dependent on the matrix $\psi$, and $b_{in}$ a matrix dependent on the matrices $\psi$ and $\xi$, on minimum $\tilde{Y}_{min}$ and maximum values $\tilde{Y}_{max}$ of the output parameter $\tilde{Y}$, and on a maximum variation $\delta \tilde{U}_{max}$ of the control $\tilde{U}$,

h) solving (2500) the problem in step g) using a solver, and

i) applying (2600) electricity distribution controls (u) in the system (2) using the solutions from step h), until the next iteration.

2. Method according to claim 1, **characterised in that** step a) comprises the definition of parameters for determining a production and/or consumption profile of at least one element (4, 8, 10, 14) of the system (2) over the time period ($T_{totale}$).

3. Method according to any one of the preceding claims, **characterised in that** step c) for defining the optimisation parameters (213) comprises at least the definition of the time period ($T_{totale}$) and an updating period ($T_{actu}$) defining the interval between two iterative steps.

4. Method according to any one of the preceding claims, **characterised in that** the matrices $\phi$, $\psi$ and $\xi$ are defined by the following equations:

$$\phi = \begin{bmatrix} C \\ CA \\ CA^2 \\ \vdots \\ CA^N \end{bmatrix} \qquad \psi = \begin{bmatrix} D & 0 & \cdots & \cdots & \cdots & 0 \\ CB & D & \ddots & & & \vdots \\ CAB & CB & \ddots & \ddots & & \vdots \\ \vdots & \ddots & \ddots & \ddots & \ddots & \vdots \\ \vdots & & \ddots & \ddots & \ddots & 0 \\ CA^{N-1}B & \cdots & \cdots & CAB & CB & D \end{bmatrix}$$

$$\xi = \begin{bmatrix} F & 0 & \cdots & \cdots & \cdots & 0 \\ CG & F & \ddots & & & \vdots \\ CAG & GF & \ddots & \ddots & & \vdots \\ \vdots & \ddots & \ddots & \ddots & \ddots & \vdots \\ \vdots & & \ddots & \ddots & \ddots & 0 \\ CA^{N+1}G & \cdots & \cdots & CAG & CG & F \end{bmatrix}$$

5. Method according to any one of the preceding claims, **characterised in that** the state x of the system corresponds to the state of charge of each electricity storage element (11).

6. Method according to any one of the preceding claims, **characterised in that** control parameter u is defined according to the following vector:

$$u = \begin{bmatrix} P^{M_{11}}_{charge} & P^{M_{11}}_{decharge} & P^{M_{14}}_{achat} & P^{M_{14}}_{revente} & P^{M_8}_{localCons} \end{bmatrix}^T$$

where $P^{M_{11}}_{charge}$ and $P^{M_{11}}_{decharge}$ are charge and discharge powers for each storage element (11), respectively, $P^{M_{14}}_{achat}$ and $P^{M_{14}}_{revente}$ are purchased and resold powers for each distribution network (14) and $P^{M_8}_{localCons}$ corresponds to the local powers produced by each element (8, 10) of the system (2) and consumed locally.

7. Method according to any one of the preceding claims, **characterised in that** the disturbance parameter w is defined according to the following vector:

$$w = \begin{bmatrix} P^{M_8}_{prod} & E^{M_{10}}_{vehicule} \end{bmatrix}^T$$

where $P^{M_8}_{prod}$ corresponds to the electrical powers produced locally by each local production source (8), and $E^{M_{10}}_{vehicule}$ corresponds to the energies consumed by each electric vehicle (10) incorporating one or a plurality of storage elements (11), when said elements are not connected to the rest of the system (2).

8. Method according to any one of the preceding claims, **characterised in that** the system output parameter is defined according to the following vector

$$y = \begin{bmatrix} P^{M_1}_{b\hat{a}timent} & x & 0 \end{bmatrix}^T$$

where $P^{M_1}_{b\hat{a}timent}$ corresponds to the power supplied to each building (4), and x corresponds to the states of charge of each storage element (11).

9. Method according to any one of the preceding claims, **characterised in that** the matrix $A_{in}$ is defined according to the following equation:

$$A_{in} = \begin{bmatrix} \psi \\ -\psi \\ D_{T_{total}+1} \\ -D_{T_{total}+1} \\ \begin{bmatrix} I_{N_u} & O_{N_u \times N_u \cdot T_{total}} \end{bmatrix} \\ \begin{bmatrix} -I_{N_u} & O_{N_u \times N_u \cdot T_{total}} \end{bmatrix} \end{bmatrix} \qquad \text{where} \quad D_{T_{totale}+1} = \begin{bmatrix} I_{N_u} & -I_{N_u} & 0_{N_u} & \cdots & \cdots & 0_{N_u} \\ 0_{N_u} & I_{N_u} & -I_{N_u} & & & \vdots \\ \vdots & \ddots & \ddots & \ddots & & \vdots \\ \vdots & & \ddots & \ddots & \ddots & 0_{N_u} \\ 0_{N_u} & \cdots & \cdots & 0_{N_u} & I_{N_u} & -I_{N_u} \end{bmatrix}$$

and $I_{N_u}$ is an identity matrix having the dimension $N_u$, $0_{N_u \times N_u \cdot T_{totale}}$ is a zero matrix comprising $N_u$ rows and $N_u \cdot T_{totale}$ columns, where $N_u$ is the number of controls of the parameter $\tilde{U}$,
and **in that** the matrix $b_{in}$ is defined according to the following equation:

$$b_{in} = \begin{bmatrix} \tilde{Y}_{max} - \phi x_0 - \xi \tilde{w} \\ -\tilde{Y}_{min} + \phi x_0 + \xi \tilde{w} \\ \delta \tilde{U}_{max} \\ \delta \tilde{U}_{max} \\ \delta U_0 + U_{-1} \\ \delta U_0 - U_{-1} \end{bmatrix}$$

where $\tilde{Y}_{max}$ and $\tilde{Y}_{min}$ are the maximum and minimum output parameters $\tilde{Y}$ for the period $T_{totale}$, $\delta \tilde{U}_{max}$ is the maximum permitted control variation between two times k and k+1, $\delta U_0$ is the maximum permitted control variation at the first time, and $U_{-1}$ is the final control applied.

10. Method according to any one of the preceding claims, **characterised in that** step f) for updating a preview of the behaviour of the production and consumption elements consists of updating the energy production and consumption profiles for each of the elements (4, 8, 10, 14) of the system (2), and updating constraints relating to the control parameter ($\tilde{U}$), the output parameter ($\tilde{Y}$), the disturbance parameter ($\tilde{w}$), and to a variation ($\delta \tilde{U}$) between two matrices $\tilde{U}$ calculated at two consecutive times k and k+1.

11. Device for distributing, during a given time period ($T_{totale}$), electricity flows (E'4, E8, E10, E'10, E14, E'14) in a system (2) comprising:

    - at least one production element and one consumption element of electricity from the following elements:

        - an electricity distribution network (14) suitable for supplying and/or receiving energy from other elements (4, 8, 10) of the system (2),

- an electricity storage element (11) suitable for receiving the energy production (E8, E14) from the production elements (8, 14) of the system (2) and/or for supplying energy (E10) to the energy consumption elements (4, 14) of the system (2),
- a building (4) suitable for consuming energy (E8, E10, E14) produced locally and/or from the distribution network (14) and/or from a storage element (11),
- a local electricity production source (8) suitable for supplying energy to the network (14) and/or building (4) and/or storage element (11), and

- means (18) for measuring the state of charge of each storage element (11) and electrical powers produced and consumed by each of the elements (4, 8, 10, 14) of the system (2),

**characterised in that** the distribution device comprises calculation means configured for implementing at least:

- initialisation steps (1100, 1200, 1300, 1400) consisting of:

a) defining (1100) physical system modelling parameters (212), wherein the physical parameters are physical quantities conditioning the energy consumption or production of the production element and the consumption element,
b) defining (1200) a model of the system, in the form of state representation using the physical parameters (212) determined in step a), wherein the system model is defined with the following state representation:

$$\begin{cases} x_{k+1} = Ax_k + Bu_k + Gw_k \\ y_k = Cx_k + Du_k + Fw_k \end{cases}$$

where $x_k$ and $x_{k+1}$ are the states x of the system at times k and k+1, $y_k$ is an output parameter y of the system at the time k, $u_k$ is a control parameter at the time k, $w_k$ is a disturbance parameter w at the time k and A, B, G, C, D, F are constant matrices,
c) defining (1300) optimisation parameters (213) for solving an optimisation problem and
d) predefining (1400) the optimisation problem, over the given time period ($T_{totale}$), for the distribution of the electricity flows (E'4, E8, E10, E'10, E14, E'14) of the system (2) using the model defined in step b), wherein predefining the optimisation problem consists of modelling the behaviour of the system for the given time period ($T_{totale}$) using the following equation:

$$\widetilde{Y} = \phi x_0 + \psi \widetilde{U} + \xi \widetilde{w}$$

where $x_0$ is an initial state of the system, Y, U and $\hat{w}$ are power, control and disturbance parameters of the system respectively, for the given time period ($T_{totale}$), expressed in matrix form, and $\Phi$, $\psi$ and $\xi$ are constant matrices wherein the elements are dependent on the constant matrices A, B, G, C, D and F, and

- iterative steps (2200, 2300, 2400, 2500, 2600) consisting, at successive updating times ($t_0$, $t_0+T_{actu}$, $t_0+2T_{actu}$, ...) of the given time period ($T_{totale}$), of:

e) measuring (2200) the state of charge (x) of each electricity storage element (11), and the electricity production and consumption powers of the various elements (4, 8, 10, 14) of the system (2),
f) updating (2300) a preview of the behaviour of the production and consumption elements (4, 8, 10, 14) of the system (2) for another time period ($T'_{totale}$) of the same duration as the duration of the given time period ($T_{totale}$) and starting at considered time ($t_0$, $t_0 + T_{actu}$, $t_0+2T_{actu}$, ...),
g) defining (2400) the formulation of the optimisation problem for the other time period ($T'_{totale}$), wherein formulating the optimisation problem comprises at least the definition of an objective function $f(\tilde{U})$ and updating of optimisation problem constraints, these constraints being expressed in the form of the following inequality:

$$A_{in}\tilde{U} \leq b_{in}$$

where U is the control parameter for the given time period, $A_{in}$ a matrix dependent on the matrix $\psi$, and $b_{in}$ a matrix dependent on the matrices $\psi$ and $\xi$, on minimum $\tilde{Y}_{min}$ and maximum values $\tilde{Y}_{max}$ of the output parameter $\tilde{Y}$, and on a maximum variation $\delta\tilde{U}_{max}$ of the control $\tilde{U}$,
h) solving (2500) the problem in step g) using a solver, and
i) applying (2600) electricity distribution controls (u) in the system (2) using the solutions from step h), until the next iteration.

**12.** Device according to claim 11, **characterised in that** the storage element comprises at least one storage element (11) arranged on an electric vehicle (10).

**13.** Electric system (2) including at least:

- one production element and one consumption element of electricity from the following elements:

    - an electricity distribution network (14) suitable for supplying and/or receiving energy from other elements (4, 8, 10) of the system (2),
    - an electricity storage element (11) suitable for receiving the energy production (E8, E14) from the energy production elements (8, 14) of the system (2) and/or for supplying energy (E10) to the energy consumption elements (4, 14) of the system (2),
    - a building (4) suitable for consuming energy (E8, E10, E14) produced locally and/or from the distribution network (14) and/or from a storage element,
    - a local electricity production source (8) suitable for supplying energy to the network (14) and/or building (4) and/or storage element (11), and

- means (18) for measuring the state of charge of each storage element (11) and electrical powers produced and consumed by each of the elements (4, 8, 10, 14) of the system (2),

**characterised in that** the system (2) comprises a distribution device (20) according to any one of claims 11 to 12 and **in that** the electricity distribution network (14) is suitable for communicating dynamically (S14, S'14) with the distribution device (20), particularly on the energy purchase and sale prices and/or the power available from the distribution network and/or the presence of off-peak times in respect of network energy usage.

*Fig.1*

Fig.2

*Fig.3*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CA 2668276 A
- WO 2011024067 A
- US 2012173034 A